# EUROPÄISCHE PATENTSCHRIFT

(11) **EP 0 700 329 B1**
(45) Veröffentlichungstag und Bekanntmachung des Hinweises auf die Patenterteilung: **28.04.1999**
(21) Anmeldenummer: 94919583.8
(22) Anmeldetag: 27.05.1994
(51) Int. Cl.: B27N 3/00, B27N 1/00

(54) **VERFAHREN ZUR HERSTELLUNG VON VERBUNDWERKSTOFFEN AUS NACHWACHSENDEN ROHSTOFFEN**
PROCESS FOR PRODUCING COMPOSITE MATERIALS FROM RENEWABLE RAW MATERIALS
PROCEDE DE FABRICATION DE MATERIAUX COMPOSITES A PARTIR DE MATIERES PREMIERES RENOUVELABLES

(30) Priorität: 27.05.1993 DE 4317692
(43) Veröffentlichungstag der Anmeldung: 13.03.1996
(73) Patentinhaber: BIOTEC Biologische Naturverpackungen GmbH & Co. KG, 46446 Emmerich (DE)
(72) Erfinder: LÖRCKS, Jürgen, D-46459 Rees (DE); POMMERANZ, Winfried, D-32130 Enger (DE); KLENKE, Kurt, D-47533 Kleve (DE); SCHMIDT, Harald, D-46446 Emmerich (DE); HEUER, Joachim, D-47559 Kranenburg (DE)
(74) Vertreter: VOSSIUS & PARTNER
(86) Internationale Anmeldenummer: EP9401737
(87) Internationale Veröffentlichungsnummer: WO9427796

(56) Entgegenhaltungen:
- WO-A-90/14935
- WO-A-93/21369
- DE-A- 3 937 168
- NL-A- 9 100 937
- US-A- 4 944 823
- DATABASE WPI Week 9412, Derwent Publications Ltd., London, GB; AN 94-097321 & JP,A,6 047 714 (HAYASHI TELEMPU KK) 22. Februar 1994
- DATABASE WPI Week 8223, Derwent Publications Ltd., London, GB; AN 82-47197E & JP,A,57 071 498 (DAINIPPON INK CHEM KK) 4. Mai 1982

## Beschreibung

Die Erfindung betrifft ein Verfahren zur Herstellung von biologisch abbaubaren Naturfaserwerkstoffen (Holz, Textilfasern, Papier usw.) mit Bindemitteln aus nachwachsenden Rohstoffen. Solche Verfahren gewinnen z.B. bei der Herstellung von umweltfreundlichen und formaldehydfreien Spanplatten immer mehr an Bedeutung.

Der überwiegende Teil der Verbundwerkstoffe mit Holzspänen oder Holzfasern wird in Form ebener Platten in der Möbel- und Bauindustrie eingesetzt. Im Gegensatz zur Papier- oder Textilindustrie werden Stärkeleime in der Holzwerkstoffindustrie nicht bzw. lediglich als Streckmittel für Kunstharzleime eingesetzt.

Für die Herstellung plattenförmiger Holzwerkstoffe wurden bisher hauptsächlich organische Bindemittel aus petrochemischen Grundstoffen verwendet. Bei einer Substitution auch nur geringer Anteile dieser synthetischen Bindemittel durch Bindemittel aus nachwachsenden Rohstoffen ergeben sich erhebliche ökologische und volkswirtschaftliche Vorteile.

Bei heute üblichen Produktionsverfahren von plattenförmigen Werkstoffen werden z.B. Holzfasern unter Verwendung von synthetischen Bindemitteln durch Heißpressung hergestellt. Die Vernetzung bzw. Aushärtung des synthetischen Bindemittels erfolgt hierbei durch chemische Reaktion (Polymerisation, Polyaddition usw.). Während der chemischen Reaktion befinden sich die Holzpartikel in einem durch äußeren Druck hervorgerufenen höheren Verdichtungsgrad, als es ihrer Schüttdichte entspricht. Durch die Aushärtung des synthetischen Bindemittels wird das elastische Rückstellvermögen der Holzpartikel herabgesetzt. Der Preßvorgang ist beendet, wenn die Rückstellkräfte vollständig vom Bindemittel aufgenommen werden. Allen bisherigen Herstellungsverfahren ist gemeinsam, daß die Holzpartikel vor dem Beleimen getrocknet werden. Entsprechend dem Anteil an synthetischem Bindemittel ergeben sich nach der Beleimung Spanfeuchten von 10 bis 15 %. Höhere Spanfeuchten führen bei den konventionellen Herstellungsverfahren aufgrund des beim Heißpressen entstehenden Wasserdampfdruckes zu Spannungen im Material, die die Querzugfestigkeit der Platte überschreiten. Nach dem Öffnen der Presse reißt die Platte auf.

Die WO 90/14935 zeigt ein Verfahren und eine Vorrichtung zur Herstellung von Formkörpern, insbesondere Verbundwerkstoffen, wobei aus einer Grundmasse, z.B. Holzfaserstoffen und einem Bindemittel, z.B. Stärke ein Schmelze - Gel ausgebildet wird, das beim Verlassen des Extruders unter Schaumbildung expandiert und gleichzeitig aushärtet. Die NL-A-91 00 937 zeigt einen Verbundwerkstoff aus Faserstoffen gemäß Oberbegriff des Anspruches 1 der vorliegenden Erfindung.

Der Erfindung liegt die Aufgabe zugrunde, ein umweltfreundliches und kostengünstiges Verfahren zur Herstellung von schadstofffreien und vollständig biologisch abbaubauren Naturfaserwerkstoffen zur Verfügung zu stellen.

Diese Aufgabe wird mit den Merkmalen der Patentansprüche gelöst.

Bei der Lösung geht die Erfindung von dem Grundgedanken aus, bei einem Herstellungsverfahren von vollständig biologisch abbaubaren Naturfaserwerkstoffen von einem Bindemittel auf Stärkebasis auszugehen, die Verfahrensschritte genau aufeinander abzustimmen und dabei eine entsprechende Rezepturzusammenstellung der Bindemittelmenge, des Wassers und gegebenenfalls weiterer Additive bezogen auf die trockene Span- oder Fasermenge zu wählen, damit die Verweilzeiten beim Heißpressen zu optimieren und die mechanischen Eigenschaften des hergestellten Verbundwerkstoffes entsprechend den Anforderungen der jeweiligen Verwendung zu gestalten. Die Feuchtigkeit der als Faserstoff verwendeten Holzspäne wird als Löse- und Quellmittel bei der Herstellung des Naturfasergemisches genutzt.

Stärke und/oder Dextrinleime zur Herstellung von Verbundwerkstoffen mit Holzspänen und Holzfasern sind wirtschaftlich besonders nutzbar, wenn sich die erforderlichen verfahrenstechnischen Anforderungen in eine industrielle Fertigung umsetzen lassen, die es erlaubt, die zu substituierenden Produkte in einer mengenmäßig vergleichbaren Größenordnung wie Rohstoffe für Kunstharz-Bindemittel herzustellen.

Die aus den verschiedenen Pflanzen gewinnbare native Stärke ist in kaltem Wasser unlöslich und daher in diesem Zustand als Bindemittel ungeeignet. Es bedarf eines chemischen und/oder physikalischen Prozesses, um der Stärke eine Bindemitteleigenschaft zu verleihen. Unabhängig vom jeweiligen Prozeß ist es das Ziel, die Stärke in ein kolloidales System zu überführen. Nach Abdampfen des Lösemittels (Wasser) entsteht eine feste Matrix, die mit anderen Stoffen eine mehr oder weniger ausgeprägte Adhäsionsbindung eingehen kann.

Die erfindungsgemäß hergestellten Naturfaser-Werkstoffe, -Platten, -Formteile und -Profile bestehen in vorteilhafter Weise vollständig aus nachwachsenden Rohstoffen. Sie sind biologisch abbaubar, vollständig schadstofffrei (formaldehydfrei) und können auch thermisch verwertet werden.

Beim erfindungsgemäßen Verfahrensverlauf sind als technologische Einflußfaktoren während des Preßvorganges insbesondere die Preßtemperatur (z.B. 160°C - 220°C); der Preßdruck, die Schließgeschwindigkeit der Presse, die Preßzeit, die Vliestemperatur sowie die Preßphasen (Überverdichtung, Entlastung, Heizphase, Kalibrierphase) zu berücksichtigen.

Die Optimierung technologischer Einflußgrößen erfolgt in Abhängigkeit von den Rezepturparametern bzw. der Beschaffenheit der Rohstoffkomponenten.

Neben den preßtechnischen Parametern ist die zum Aufquellen der Stärke erforderliche Wassermenge ein für die Preßzeit bedeutsamer Rezepturfaktor. Den Bindemitteln sind deshalb geeignete Additive beizugeben, die in ihrer Wirkung eine Reduzierung des Wasser-Bindemittel-Verhältnisses ermöglichen, damit es gelingt, die Holzfeuchte als Löse- oder Quellmittel zu aktivieren.

Die Herstellung des Rohstoffgemisches erfolgt in einer geeigneten Mischanlage, vorzugsweise einem Pflugscharmischer mit Messerkopf. In ihn werden alle Zutaten, z.B. Holzspäne, Wasser und Stärkemehl, nach einer bestimmten Rezeptur gegeben. Nach ausreichendem Vermischen wird das Gemisch in eine Form gegeben, kurz verdichtet, abgedeckt und in eine beheizbare Presse eingelegt. Bei einer bestimmten Temperatur wird der Kuchen nach einem speziellen Verfahren gepreßt und danach als fertige Platte der Presse entnommen. Nach diesem Verfahrensprinzip sind Faserverbundplatten mit verschiedenen mechanischen Eigenschaften herstellbar.

Zusätzlich können in die Preßform furnierte Platten oder Platten mit Dekoration eingelegt und mit dem Fressen auf die Faserverbundplatte aufgebracht werden.

Ebenso kann das Rohstoffgemisch durch Extruder mit geeigneten Düsen gepreßt und gegebenenfalls mit dem Extrusionsvorgang auf die oben genannten Platten aufgebracht werden.

Beim Einsatz von Bindemitteln aus nachwachsenden Rohstoffen (z.B. Stärke) beruht der Abbindevorgang nicht auf einer chemischen Reaktion. Die Aushärtung des natürlichen Bindemittels ist ein physikalischer Vorgang, der durch die Verdunstung des Wassers einsetzt. Die Aushärtung nimmt mit fortschreitender Trocknung zu. Dieser charakteristische Unterschied zu reaktiven, synthetischen Bindemitteln bedingt ein vollständig anderes Herstellungsverfahren, das wesentlich von den bisherigen Produktionsmethoden abweicht.

Im folgenden werden Ausführungsbeispiele des erfindungsgemäßen Verfahrens vorgestellt:

### Beispiel 1

1760 g mittelfeine Holzspäne werden in einem 130 l-Pflugscharmischer mit Messerkopf vorgelegt und mit 520 g Wasser besprüht. Dann werden 520 g Kartoffelstärke zugegeben und 1 Minute weitergemischt.

Von dieser Mischung werden 50 % abgenommen und in einem Rahmen mit den Innenmaßen 420x420 mm auf ein Blech gleichmäßig ausgestreut. Die Schüttung wird kurz mit einer Kraft von 700 N verdichtet. Der so entstandene Kuchen wird mit einem weiteren Blech bedeckt und in eine beheizbare Presse eingelegt.

Bei einer Pressentemperatur von 170°C wird der Kuchen für 2 Sekunden auf eine Höhe von 10 mm verdichtet. Der Preßdruck wird nun für 20 Minuten auf 0,1 N/mm² gehalten. Anschließend wird der Preßflächenabstand für 1 Minute auf 10 mm eingestellt. Dann wird die Presse geöffnet und die fertige Platte entnommen.

Die Laboruntersuchungen führten zu folgenden Ergebnissen:
- Rohdichte:: 530 g/l
- Biegefestigkeit:: 18 N/mm².

### Beispiel 2

1760 g mittelfeine Holzspäne werden in einem 130 l-Pflugscharmischer mit Messerkopf vorgelegt und mit 520 g Wasser besprüht. Dann werden 520 g Maisstärke zugegeben und 1 Minute weitergemischt.

Von dieser Mischung werden 50 % abgenommen und in einem Rahmen mit den Innenmaßen 420x420 mm auf ein Blech gleichmäßig ausgestreut. Die Schüttung wird kurz mit einer Kraft von 700 N verdichtet. Der so entstandene Kuchen wird mit einem weiteren Blech bedeckt und in eine beheizbare Presse eingelegt.

Bei einer Pressentemperatur von 170°C wird der Kuchen für 2 Sekunden auf eine Höhe von 10 mm verdichtet. Der Preßdruck wird nun für 20 min auf 0,1 N/mm² gehalten. Anschließend wird der Preßflächenabstand für 1 Minute auf 10 mm eingestellt. Dann wird die Presse geöffnet und die fertige Platte entnommen.

Die Laboruntersuchungen führten zu folgenden Ergebnissen:
- Rohdichte:: 546 g/l
- Biegefestigkeit:: 14 N/mm².

### Beispiel 3

1760 g mittelfeine Holzspäne werden in einem 130 l-Pflugscharmischer mit Messerkopf vorgelegt und mit 520 g Wasser besprüht. Dann werden 520 g kationische Weizenstärke zugegeben und 1 Minute weitergemischt.

Von dieser Mischung werden 50 % abgenommen und in einem Rahmen mit den Innenmaßen 420x420 mm auf ein Blech gleichmäßig ausgestreut. Die Schüttung wird kurz mit einer Kraft von 700 N verdichtet. Der so entstandene Kuchen wird mit einem weiteren Blech bedeckt und in eine beheizbare Presse eingelegt.

Bei einer Pressentemperatur von 170°C wird der Kuchen für 2 Sekunden auf eine Höhe von 10 mm verdichtet. Der Preßdruck wird nun für 20 Minuten auf 0,1 N/mm² gehalten. Anschließend wird der Preßflächenabstand für 1 Minute auf 10 mm eingestellt. Dann wird die Presse geöffnet und die fertige Platte entnommen.

Die Laboruntersuchungen führten zu folgenden Ergebnissen:
- Rohdichte:: 528 g/l
- Biegefestigkeit:: 21 N/mm².

### Beispiel 4

1760 g feine Holzspäne werden in einem 130 l-Pflugscharmischer mit Messerkopf vorgelegt und mit 520 g Wasser besprüht. Dann werden 520 g Kartoffelstärke zugegeben und 1 Minute weitergemischt. 1760 g grobe Holzspäne werden in einem 130 l-Pflugscharmischer mit Messerkopf vorgelegt und mit 520 g Wasser besprüht. Dann werden 520 g Kartoffelstärke zugegeben und 1 Minute weitergemischt.

Von beiden Mischungen werden jeweils 25 % abgenommen und in einem Rahmen mit den Innenmaßen 420x420 mm folgendermaßen auf ein Blech gestreut: zunächst die Hälfte der feinen Späne, dann die groben Späne und zum Schluß die andere Hälfte der feinen Späne. Die Schüttung wird kurz mit einer Kraft von 700 N verdichtet. Der so entstandene Kuchen wird mit einem weiteren Blech bedeckt und in eine beheizbare Presse eingelegt.

Bei einer Pressentemperatur von 170°C wird der Kuchen für 20 Sekunden auf eine Höhe von 11 mm verdichtet. Der Preßdruck wird nun für 14 Minuten auf 0,1 N/mm² gehalten. Anschließend wird der Preßflächenabstand für 1 Minute auf 10 mm eingestellt. Dann wird die Presse geöffnet und die fertige Platte entnommen.

Die Laboruntersuchungen führten zu folgenden Ergebnissen:
- Rohdichte:: 524 g/l
- Biegefestigkeit:: 19 N/mm².

### Beispiel 5

1760 g mittelfeine Holzspäne werden in einem 130 l-Pflugscharmischer mit Messerkopf vorgelegt und mit 520 g Wasser besprüht. Dann werden 520 g Weizenstärke zugegeben und 1 Minute weitergemischt.

Von dieser Mischung werden 50 % abgenommen und in einem Rahmen mit den Innenmaßen 420x420 mm folgendermaßen auf ein Blech gleichmäßig ausgestreut: Zunächst eine 3 mm dicke Grundschicht, dann werden 100 g Wasser aufgesprüht, anschließend die restliche Mischung und zum Schluß 100 g Wasser aufgesprüht. Die Schüttung wird kurz mit einer Kraft von 700 N verdichtet. Der so entstandene Kuchen wird mit einem weiteren Blech bedeckt und in eine beheizbare Presse eingelegt.

Bei einer Pressentemperatur von 190°C wird der Kuchen für 20 Sekunden auf eine Höhe von 9,5 mm verdichtet. Der Preßflächenabstand wird nun für 12 Minuten auf 12,5 mm gehalten. Anschließend wird der Preßflächenabstand für 3 Minuten auf 10 mm eingestellt. Dann wird die Presse geöffnet und die fertige Platte entnommen.

Die Laboruntersuchungen führten zu folgenden Ergebnissen:
- Rohdichte:: 551 g/l
- Biegefestigkeit:: 17 N/mm².

## Patentansprüche

1. Verfahren zur Herstellung von Verbundwerkstoffen aus partikelförmigen Faserstoffen von nachwachsenden Rohstoffen, insbesondere Holzfasern, die durch biologisch abbaubare Bindemittel auf Stärkebasis physikalisch gebunden und verpreßt werden, wobei die Faserstoffe und ein eine quellbare Stärke enthaltendes Bindemittel mit Wasser derart vermischt werden, daß die Stärke in ein Kolloid überführt wird, wonach die entstandene Mischung in einer beheizbaren Plattenpresse unter Druck aufgeheizt und getrocknet wird,
dadurch gekennzeichnet,
daß eine Plattenpresse mit variabel einstellbarem Plattenabstand eingesetzt wird, in der die Trocknung und Verdichtung vor Einstellung des Abstandes für das Endmaß der Platte unter Einschaltung zwischenzeitlicher Druckentlastung derart durchgeführt wird, daß eine Plattendichte in der Größenordnung von 524-551 g/l erreicht wird.

2. Verfahren zum Herstellen des Verbundwerkstoffes nach Anspruch 1, dadurch gekennzeichnet, daß das Bindemittel eine native Stärke in natürlicher oder Hybridform, entstammend beispielsweise der Kartoffel, dem Maniok, dem Mais, dem wachsigen Mais, dem Mais mit hohem Amylosegehalt, Getreidemehlen, oder ein Stärkederivat, bestehend aus einer auf physikalischem und/oder chemischen Weg modifizierten Stärke ist.

3. Verfahren nach Anspruch 1 oder 2 mit den Schritten:
a) Zuführen einer dosierten Menge pflanzlicher Rohstoffe und Wasser und Durchmischen in einer Mischanlage,
b) Zuführen einer dosierten Menge Bindemittel und weiteres Durchmischen,
c) Eingeben des Gemisches in eine Form, gegebenenfalls schichtweise im Wechsel mit Wasser,
d) Verdichten des Gemisches,
e) Pressen des Gemisches zur Ausbildung von Verbundwerkstoffen.

4. Verfahren nach Anspruch 1 oder 2 mit den Schritten:
a) Zuführen einer dosierten Menge pflanzlicher Rohstoffe und Wasser und Durchmischen in einer Mischeinrichtung,
b) Zuführen einer dosierten Menge Bindemittel und weiteres Durchmischen,
c) Eingeben des Gemisches in eine Extruderanlage, gegebenenfalls weiteres Hinzufügen von Wasser,
d) Verdichten des Gemisches, insbesondere bei 20° bis 250°C,
e) Extrudieren und Eingeben des Gemisches in eine Form,
f) Pressen des Gemisches zur Ausbildung von Verbundwerkstoffen.

5. Verfahren nach Anspruch 3 oder 4, dadurch gekennzeichnet, daß die Mischeinrichtung ein Pflugscharmischer mit Messerkopf ist.

6. Verfahren nach Anspruch 3, 4 oder 5, dadurch gekennzeichnet, daß der Mischeinrichtung eine Dosiereinrichtung zur Dosierung der pflanzlichen Rohstoffe, des Wassers und des Bindemittels zugeordnet ist.

7. Verfahren nach einem der Ansprüche 3 bis 6, dadurch gekennzeichnet, daß das Gemisch 5 bis 60 Gew.-% Wasser und 5 bis 60 Gew.-% Bindemittel enthält.

8. Verfahren nach einem der Ansprüche 3 bis 4, dadurch gekennzeichnet, daß als pflanzlicher Rohstoff Lignocellulose, Holz oder Holzspäne oder Naturfasern, wie Baumwolle zugeführt werden.

9. Verfahren nach einem der Ansprüche 3 und 5 bis 8, dadurch gekennzeichnet, daß das Gemisch zu einem Vlies geformt wird.

10. Verfahren nach einem der Ansprüche 3 bis 9, dadurch gekennzeichnet, daß der Verfahrensschritt e) bei erhöhter Temperatur abläuft.

11. Verfahren nach Anspruch 10, dadurch gekennzeichnet, daß der Verfahrensschritt e) nach einem bestimmten Temperatur- und Zeitregime abläuft.

12. Verfahren nach Anspruch 10 oder 11, dadurch gekennzeichnet, daß die Temperatur während des Verfahrensschrittes e) bei 80 bis 250°C liegt.

13. Verfahren nach einem der Ansprüche 3 bis 12, dadurch gekennzeichnet, daß der Preßdruck während des Verfahrensschrittes e) ein- oder mehrmals verändert wird.

14. Verfahren nach einem der Ansprüche 3 bis 12, dadurch gekennzeichnet, daß der Preßdruck während des Verfahrensschrittes e) Werte zwischen 0,1 N/mm² und 50 N/mm² annimmt.

15. Verfahren nach einem der Ansprüche 3 und 5 bis 14, dadurch gekennzeichnet, daß der Preßflächenabstand während des Verfahrensschrittes e) ein- oder mehrmals verändert wird.

16. Verfahren nach einem der Ansprüche 3 bis 15, dadurch gekennzeichnet, daß das Gemisch mit dem Verfahrensschritt zum Pressen des Gemisches auf furnierte Platten oder Platten mit Dekoration aufgebracht wird.

17. Verfahren nach einem der Ansprüche 1 bis 16, dadurch gekennzeichnet, daß als nachwachsende Rohstoffe pflanzliche Rohstoffe, wie Lignocellulose, Holz, oder Naturfasern, eingesetzt werden.

## Claims

1. A process for preparing composite materials made of particle-like fiber materials of renewable raw materials, especially wood fibers, which are physically bound and pressed by biodegradable starch-based binders, wherein the fiber materials and a binder containing swellable starch are mixed with water such that the starch is converted into a colloid and, subsequently, the resulting mixture is heated and dried in a heatable plate press under pressure, characterized in that a plate press with a variably adjustable plate distance is used in which drying and compression are performed by intermediate pressure reduction prior to adjusting the distance for the final dimension of the plate such that a plate density between 524-551 g/l is achieved.

2. The process for preparing the composite material of claim 1, characterized in that the binder includes native starch in natural or hybrid form derived, for example, from potatoes, manioc, corn, wax corn, corn with high amylose content, grain flours, or a starch derivative consisting of physically and/or chemically modified starch.

3. The process as defined in claim 1 or 2 comprising the steps of:
a. adding measured amounts of plant-based raw materials and water, and mixing them in a mixer,
b. adding measured amounts of binder, and further mixing,
c. placing the mixture in a mold, if desired, in layers alternating with water,
d. compressing the mixture,
e. pressing the mixture to form composite materials.

4. The process as defined in claim 1 or 2 comprising the steps of:
a. adding measured amounts of plant-based raw materials and water, and mixing them in a mixer,
b. adding measured amounts of binder, and further mixing,
c. placing the mixture in an extruder, if desired, adding more water,
d. compressing the mixture in particular at 20° to 250°C,
e. extruding and placing the mixture in a mold,
f. pressing the mixture to form composite materials.

5. The process as defined in claim 3 or 4, characterized in that the mixer is a plough blade mixer with a knife head.

6. The process as defined in claim 3, 4 or 5, characterized in that the mixer comprises a measuring device for measuring the amounts of plant-based raw materials, water and binder.

7. The process as defined in any of claims 3 to 6, characterized in that the mixture contains 5 to 60% by weight of water and 5 to 60% by weight of binder.

8. The process as defined in any of claims 3 to 7, characterized in that said plant-based raw materials which are added are lignocellulose, wood, wood chips, or natural fibers such as cotton.

9. The process as defined in any of claims 3 and 5 to 8, characterized in that the mixture is processed to a non-woven fabric.

10. The process as defined in any of claims 3 to 9, characterized in that step (e) is conducted at elevated temperature.

11. The process as defined in claim 10, characterized in that step (e) is conducted in accordance with a predetermined temperature and time profile.

12. The process as defined in claim 10 or 11, characterized in that the temperature in step (e) is between 80 to 250°C .

13. The process as defined in any of claims 3 to 12, characterized in that the mold pressure in step (e) is changed one or more times.

14. The process as defined in any of claims 3 to 12, characterized in that the mold pressure in step (e) is between 0.1 N/mm² and 50 N/mm².

15. The process as defined in any of claims 3 and 5 to 14, characterized in that the distance between the pressing surfaces in step (e) is changed one or more times.

16. The process as defined in any of claims 3 to 15, characterized in that the mixture is applied to plywood or decorated boards in the step for pressing the mixture.

17. The process as defined in any of claims 1 to 16, characterized in that the renewable raw materials are plant-based raw materials such as lignocellulose, wood, or natural fibers.

## Revendications

1. Procédé de fabrication de matériaux composites à partir de substances fibreuses sous forme de particules de matières premières renouvelables, en particulier de fibres de bois qui sont liées physiquement et comprimées par des agents liants dégradables biologiquement à base d'amidon, dans lequel les substances fibreuses et un agent liant contenant un amidon qui peut gonfler, sont mélangés avec de l'eau de façon à ce que l'amidon est transformé en un colloïde, après quoi le mélange formé est chauffé dans une presse à plaques ou plateaux chauffable sous pression et séché,
caractérisé en ce qu'
on met en oeuvre une presse à plaques avec un intervalle de plaques, ajustable d'une manière variable dans laquelle le séchage et le compactage sont effectués avant le réglage de l'intervalle pour la cote finale des plaques tout en interposant une détente intermédiaire dans le temps, de façon à ce qu'on obtienne une densité de plaque de l'ordre de grandeur de 524-551 g/l.

2. Procédé de fabrication du matériau composite selon la revendication 1,
caractérisé en ce que
l'agent liant est un amidon natif sous forme naturelle ou hybride, provenant par exemple des pommes de terre, du manioc, du maïs, du maïs glutineux, du maïs ayant une teneur élevée en amylose, des farines de céréales, ou un dérivé d'amidon consistant en un amidon modifié par voie physique et/ou chimique.

3. Procédé selon la revendication 1 ou la revendication 2 comportant les étapes :
a) amenée d'une quantité dosée de matières premières végétales et d'eau et mélange intime dans une installation de mélange,
b) amenée d'une quantité dosée d'agent liant et mélange intime à nouveau,
c) introduction du mélange dans un moule, éventuellement par couches en alternance avec de l'eau,
d) compactage du mélange,
e) pressage du mélange en vue de la formation de matériaux composites.

4. Procédé selon la revendication 1 ou la revendication 2 avec les étapes :
a) amenée d'une quantité dosée de matières premières végétales et d'eau et mélange intime dans un dispositif de mélange,
b) amenée d'une quantité dosée d'agent liant et mélange intime à nouveau,
c) introduction du mélange dans une installation d'extrudeuse, et éventuellement addition supplémentaire d'eau,
d) compactage du mélange, en particulier à 20°C à 250°C,
e) extrusion et introduction du mélange dans un moule,
f) pressage du mélange en vue de la formation de matériaux composites.

5. Procédé selon la revendication 3 ou la revendication 4,
caractérisé en ce que
le dispositif de mélange est un mélangeur à soc de charrue avec tête de lames.

6. Procédé selon les revendications 3, 4, ou 5,
caractérisé en ce qu'
au dispositif de mélange, on adjoint un dispositif de dosage pour le dosage des matières premières végétales, de l'eau et de l'agent liant.

7. Procédé selon l'une des revendications 3 à 6,
caractérisé en ce que
le mélange renferme de 5 à 60 % en poids d'eau et de 5 à 60 % en poids d'agent liant.

8. Procédé selon l'une des revendications 3 à 7,
caractérisé en ce qu'
on amène comme matière première végétale, de la lignocellulose, du bois ou des copeaux de bois ou des fibres naturelles comme du coton.

9. Procédé selon l'une des revendications 3 et 5, à 8,
caractérisé en ce que
le mélange est moulé en une nappe de fibres.

10. Procédé selon l'une des revendications 3 à 9,
caractérisé en ce que
l'étape de procédé e) se déroule à température augmentée.

11. Procédé selon la revendication 10,
caractérisé en ce que
l'étape de procédé e) se déroule selon un régime déterminé de température et de temps.

12. Procédé selon la revendication 10 ou la revendication 11,
caractérisé en ce que
la température pendant l'étape de procédé e) se situe entre 80 et 250°C.

13. Procédé selon l'une des revendications 3 à 12,
caractérisé en ce que
la pression de pressage pendant l'étape de procédé est modifiée une ou plusieurs fois.

14. Procédé selon l'une des revendications 3 à 12,
caractérisé en ce que
la pression de pressage pendant l'étape de procédé e) se situe entre 0,1 N/mm² et 50 N/mm².

15. Procédé selon l'une des revendications 3 et 5 à 14,
caractérisé en ce que
l'intervalle des surfaces de pressage pendant l'étape de procédé e) est modifié une ou plusieurs fois.

16. Procédé selon l'une des revendications 3 à 15,
caractérisé en ce que
le mélange avec l'étape de procédé de pressage du mélange est appliqué sur des plaques contre-plaqués ou des plaques avec une décoration.

17. Procédé selon l'une des revendications 1 à 16,
caractérisé en ce que
comme matières premières renouvelables, on met en oeuvre des matières premières végétales comme la lignocellulose, le bois ou les fibres naturelles.
